Europäisches Patentamt

European Patent Office

Office européen des brevets

(11) Publication number: **0 316 489**
**A1**

## EUROPEAN PATENT APPLICATION

(21) Application number: **87310124.0**

(22) Date of filing: **17.11.87**

(51) Int. Cl.4: **G01S 3/78**

(43) Date of publication of application:
**24.05.89 Bulletin 89/21**

(84) Designated Contracting States:
**AT BE DE FR GB IT NL SE**

(71) Applicant: **BRITISH AEROSPACE PUBLIC LIMITED COMPANY**
**11 Strand**
**London WC2N 5JT(GB)**

(72) Inventor: **Burgess, Oswald BRITISH AEROSPACE PLC.**
**Sowerby Research Centre P.O. Box 5**
**Filton Bristol BS12 7QW(GB)**

(74) Representative: **Newell, William Joseph et al**
**British Aerospace P.L.C. Corporate Patents Department Brooklands Road**
**Weybridge, Surrey KT13 0SJ(GB)**

(54) **Surveillance apparatus.**

(57) An infra-red long range target discriminator (10) comprises a rotatable optical chopper (18) having alternate opaque and transmissive elements of equal size, and generally of the same size as the point spread function of a distant target which is a virtual point source. The discriminator (10) comprises a plurality of photodetectors (28) each of which corresponds in size to a neighbouring pair of the transmissive and opaque elements.

Figure 1

## SURVEILLANCE APPARATUS

The present invention relates to surveillance apparatus and relates particularly, but not exclusively, to surveillance apparatus adapted for long range target discrimination. The embodiment to be described relates to an infrared long range target discriminator.

In detecting airborne targets it is necessary to discriminate between the optical radiation received from the target and that received from the background sky or cloud. A problem with existing infrared apparatus is that cloud cover consisting of numerous, relatively small, clouds, i.e. alto cumulus cloud cover, creates so many false signals, i.e. clutter, that the apparatus cannot reliably detect an airborne target such as an aircraft or missile.

It has been proposed to map the shapes of clouds so that the signals which they cause can be eliminated from future scans carries out by surveillance apparatus. However, this proposal involves processing large amounts of data with the subsequent risk of "data clutter" swamping the processing system and is especially difficult to implement in the case of cloud cover of the type mentioned above.

UK Patent No. 1431792 discloses an infra-red long range target discriminator in which the image of a distant target is modulated by a moving lattice to help discriminate between a point-like target and background clutter. However, the relationships between the detector size, the size of the image of a virtual point source and the size of the opaque and transmissive elements in the moving lattice are not optimised.

An object of the present invention is to enable radiation received from a target, especially a distant target, to be separated from that received from its background thus allowing the latter to be ignored.

For the purposes of this specification the term "target" shall be taken to mean any object which it is designed to locate and is not limited to a target for destruction in the military sense.

According to the present invention we provide apparatus for detecting a target in a field-of-view comprising means for modulating received radiation comprising a plurality of elements which, in use, comprise interspersed relatively transparent and relatively opaque elements wherein the size of each relatively opaque element is comparable to and/or larger than the point spread function of a target which is a virtual point source, and further comprising means for sensing radiation emanating from the field of view comprising a plurality of detectors characterised in that the sensing area of each detector is sized to receive radiation impinging on an area of the modulating means which corresponds substantially to the area of a neighbouring pair of relatively opaque and relatively transparent elements of the modulating means.

Thus, the image of the target can be distinguished from background radiation.

Preferably, the apparatus comprises means for forming a first image plane at the modulating means and means for forming a second image plane at the sensing means.

In the embodiments to be described, the relatively opaque and relatively transparent transmissive elements are generally of the same size.

The term "point spread function" to be used in this specification means the size of the image of a source which can be considered as a point source for optical purposes. The image has a defined size due to the magnitude of the wavelength of the radiation being sensed and, in practice, also due to imperfections in the optical components employed in the surveillance apparatus. In practice, the point spread function in an infrared sensing system is approximately 40 $\mu$m. For example, it can be assumed that a military aircraft is a virtual point source at a range of approximately 5 Km.

In the embodiment to be described the modulating means is configured alternately to block and to transmit the image of a target which is virtual point source. The modulating means may comprise alternate transmissive and opaque elements and may be movable relative to the path of the target image, e.g. the modulating means may be a rotatable disc having radially extending blades defining the opaque portions with gaps in between the blades defining the transmissive portions.

The size of each opaque element of the modulating means is comparable to, but larger than, the point spread function of a target which is a virtual point source. This configuration means that the target image appears to be flashing in the second image plane which gives rise to a pulsed signal at the sensing means.

Alternatively, the modulating means may comprise a selectively addressable array of light modulating elements such as liquid crystals. In the particular embodiment to be described, the radiation receiving area of each liquid crystal element is comparable to, but larger than, the point spread function of a target which is a virtual point source.

Preferably, the sensing means comprises a plurality of photodetectors, the sensing area of each of which is approximately twice the size of said point spread function. Thus a detector which is positioned to receive a target image from the first image plane will receive the target image intermittently owing to the action of the modulating means but will receive a continuous background image as at any given time only half of the background radiation available to that detector will be blocked.

A particular embodiment of the present invention will now be described with reference to the accompanying drawings in which:-

Figure 1 is a schematic representation of an infrared long range target discriminator according to the invention;

Figure 2 is a partially completed diagrammatic view of an optical chopper used in figure 1;

Figure 3 is a diagram showing signal shapes.

Figure 4 is a schematic side view of an alternative image modulator according to the invention.

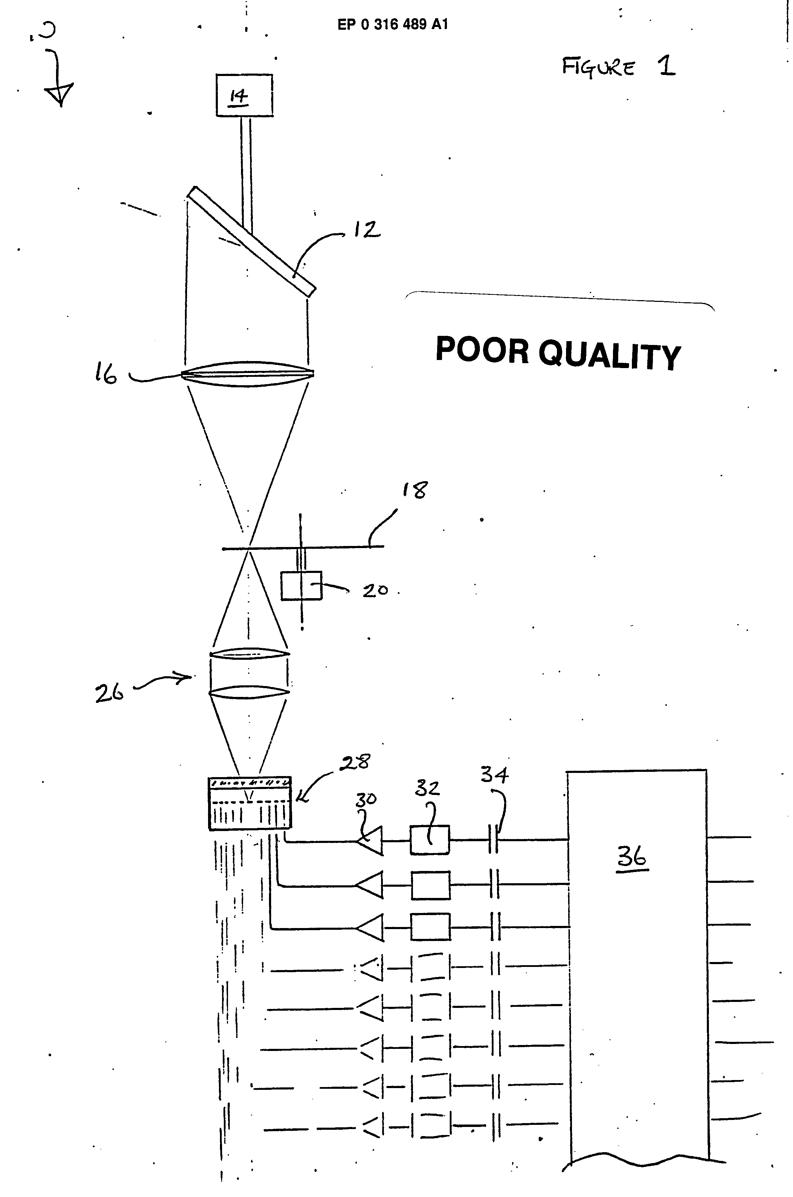

Referring to figure 1, a long range target discriminator, which detects radiation of wavelength 10 μm, indicated generally at 10, comprises a scanning mirror 12 which is rotatable in azimuth by a motor 14 and which reflects infrared rays onto a convex lens 16. The lens 16 is for focussing the infrared radiation onto an optical chopper, 18, which defines a first target image plane. The chopper is formed from a thin sheet of steel and is rotatable in the first image plane by means of a motor 20. Figure 2 illustrates, diagrammatically, the configuration of the chopper 18. It is a disc comprising radially extending blades 22 which are opaque to infrared radiation and a series of radially extending apertures 24 (three of which are shown). The sizes of the blades 22 and the apertures 24 are equal and are designed to be comparable in width to, and at least as wide as, the point spread function of a target which is a virtual point source. In practice, the taper of the apertures 24 and blades 22 is kept to a minimum and would be less than that shown in Figure 2.

Infrared radiation passes from the chopper 18 onto a relay lens system 26 which focuses it onto a row of photodetectors 28. The photodetectors 28 lie in a second target image plane. Each detector is connected to an amplifier 30 which is series connected to a filter 32 and a capacitor 34. Each filter 32 is operable to pass only signals of a frequency corresponding to a target image being sensed by the detectors. Each of the capacitors 34 is connected to a microprocessor 36.

In use, infrared radiation from a field-of-view enters the long range target discriminator 10 via scanning mirror 12 and is reflected to lens 16 which focuses it at the chopper 18. Since the width of the blades 22 and apertures 24 of the optical chopper 18 are equal to the point spread function of a target which is a virtual point source, the effect of the reticule 18 is to transmit an intermittent image of the target to the detectors 28. In contrast, the image of cloud cover will be continuous since the cloud image will only be half blocked by the chopper at any given time in relation to a single detector. The relay lens system 26 transmits the modulated image of the field-of-view to the detectors 28. The output of each detector is amplified by the corresponding amplifier 30, filtered by the corresponding filter 32 so that, if pulsed at the correct frequency, i.e. the frequency which is the number of revolutions per second of the chopper 18 multiplied by the number of apertures 24 in the chopper, will be stored in the corresponding capacitor 34. The microprocessor 36 sequentially reads the voltages stored in each of the capacitors 34 thereby noting which of the detectors in the row of detectors 28 has sensed a target. The elevation of the target is identified from which of the detectors in the row of detectors 28 sensed it and its azimuth is calculated by noting the angular position of the scanning mirror 12 at the relevant time. This can be done in a conventional way by using an encoder of known design or some other suitable device.

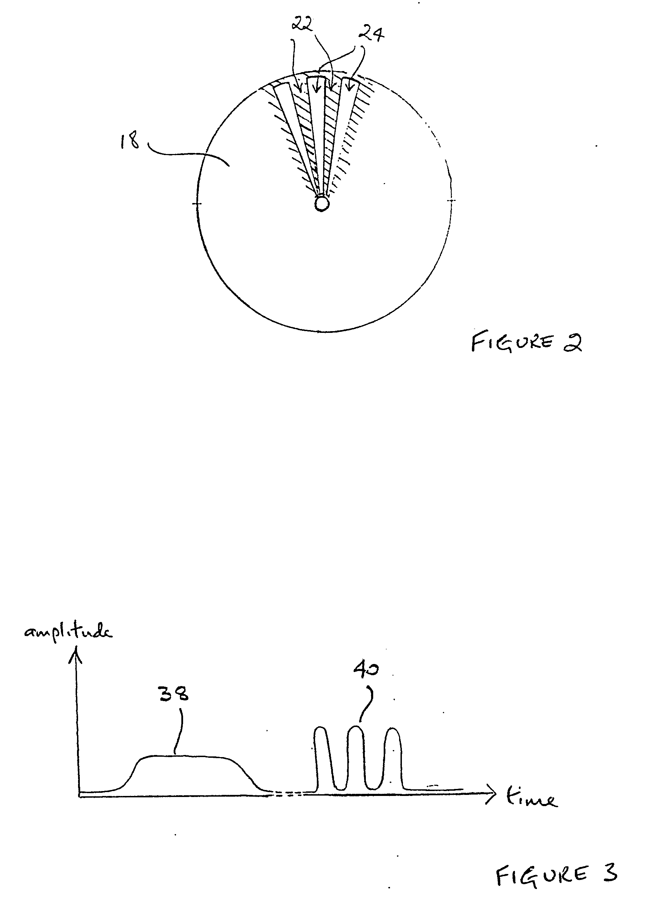

Figure 3 shows signal waveforms 38 and 40 representing those produced by the detectors 28 to indicate cloud cover and a distant airborne target such as an aircraft or missile, respectively. A cloud, even a small one, will produce an image which overlaps several apertures and blades of the chopper 18. The sensing area of each detector is approximately equal in width to the width of a blade and aperture pair in the chopper 18 therefore over the area of the chopper 18 covered by the image of a cloud, the detectors 28 will receive an approximately constant amount of infrared radiation giving rise to signal 38 which is approximately constant in strength between its rise and fall portions. In contrast, a distant target which is a virtual point source will be alternately masked and transmitted by the chopper 18 giving rise to flashes of infrared radiation which will produce pulsed signal 40 from the detectors 28. The frequency of the pulses will depend on the angular velocity of the chopper 18 and on the number of apertures in the chopper 18.

The output from the detectors 28 must be scanned very rapidly. For example, in practice the scanning mirror 12 may be rotating at 6Hz and each of the detectors 28 may have a field-of-view of two seconds of arc in which case the microprocessor 36 must scan each of the microprocessors 34 in the order of $10^6$ times a second. Alternatively a multiplexing arrangement may be used to reduce the sampling rate.

The scanning mirror 12 may be tilted as well as being rotated in order to increase the size of the field-of-view in elevation.

An alternative to the arrangement described above, would be to use a stationary chopper and to rotate the image of the scene being viewed. This can be done be routing the image beam through rotating mirror or prism arrangements.

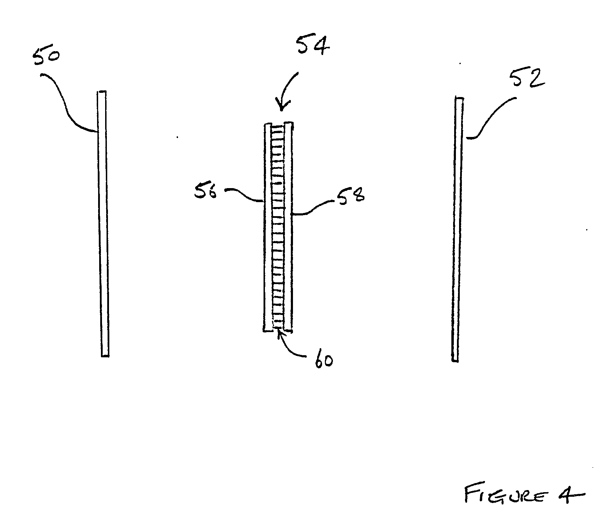

Another alternative is to use a bistable liquid crystal arrangement for alternately blocking and transmitting the image of a target which is a virtual point source. Figure 4 shows a possible arrangement in which two crossed polarising filters 50 and 52 are arranged on either side of a liquid crystal arrangement 54. The liquid crystal arrangement 54 comprises two glass plates 56 and 58 with an array of liquid crystal sachets 60 sandwiched therebetween. The surface area of the radiation receiving face of each sachet 60 is approximately the same size, and larger than, the point spread function of a virtual point source. Electrically conductive paths to each liquid crystal sachet 60 are laid on each of the glass plates 56 and 58. Each liquid sachet 60 has the property that it can be stressed using an electrical field so as to rotate light which is incident upon it. In this way, the liquid crystal arrangement 54 can be controlled so as selectably to nullify the effect of the second polarising filter 52, i.e. to transmit part of the image incident on the second polarising filter 52. Hence, by controlling the electrical field applied to selected one of the liquid crystal sachets 60 the image of a target which is a virtual point source can alternately be transmitted and blocked.

For example, the system may be arranged so that an electric field is applied successively to one half of the sachets 60 and then to the other half, wherein the halves in question comprise alternate ones of the sachets 60 in each row and column of the liquid crystal array. If so, the sensing area of each detector in the row of detectors 28 would be sized to correspond to the area of two neighboring liquid crystal sachets 60. In this way, the image of a target which is a virtual point source will be intermittently transmitted whereas the imaged of the background will be continuously transmitted.

A long range target discriminator according to the present invention enables distant airborne targets to be distinguished from cloud cover and may be used in conjunction with a short range detector to obtain a satisfactory degree of accuracy in locating a target as it approaches or is approached.

It will be understood that whilst the apparatus described above is designed for detecting infrared radiation, the invention is also applicable to apparatus for detecting any other kind of optical radiation. If visible light is to be detected however, it would either be necessary to have a light source on the target or to arrange the apparatus so that it operates negatively, i.e. detects dark objects-since most targets look black at a distance.

It will be understood that other modulation methods may be used to obtain the equivalent effect of the embodiments described above.

In particular, it is not essential that the relatively opaque and relatively transmissive elements of the modulating means are of equal size although this is preferred.

Further, the relatively opaque elements may be partially transmissive if desired as long as their transmissivity at the wavelength of interest is appreciably less than that of the relatively transmissive elements.

## Claims

1. Apparatus (10) for detecting a target in a field-of-view comprising means (18) for modulating received radiation comprising a plurality of elements which, in use, comprise interspersed relatively transparent and relatively opaque elements (24,22) wherein the size of each relatively opaque element (22) is comparable to and/or larger than the point spread function of a target which is a virtual point source, and further comprising means for sensing radiation emanating from the field of view comprising a plurality of detectors (28) characterised in that the sensing area of each detector (28) is sized to receive radiation impinging on an area of the modulating means (18) which corresponds substantially to the area of a neighbouring pair of relatively opaque and relatively transparent elements (24,22) of the modulating means (18).

2. Apparatus according to claim 1 characterised by means (16) for forming a first image plane at the modulating means (18) and means (26) for forming a second image plane at the sensing means (28).

3. Apparatus according to claim 1 or claim 2 characterised in that the transmissive elements (24) and the opaque elements (22) are of generally the same size.

4. Apparatus according to any preceding claim characterised in that the sensing area of each detector (28) is equal to twice said point spread function. 5. Apparatus according to any preceding claim characterised in that the modulating means comprises an optical chopper (18) having alternate transmissive and opaque elements (24, 22).

6. Apparatus according to any preceding claim characterised in that the modulating means (18) is movable relative to the path of the target image.

7. Apparatus according to any of claims 1 to 5 characterised by being arranged so that the target image is movable relative to the modulating means.

8. Apparatus according to any of claims 1 to 4 characterised in that the modulating means comprises a selectably addressable array (54) of light modulating elements.

Apparatus according to claim 8 characterised in that the modulating elements are liquid crystals.

10. Apparatus according to claim 8 or claim 9 characterised in that said array (54) is positioned intermediate two crossed polarising filters (50, 52).

11. Apparatus according to any preceding claim adapted for detecting infrared radiation.

FIGURE 1

FIGURE 2

FIGURE 3

FIGURE 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-3 638 025 (R.H. DISHINGTON et al.)<br>* figure 2; column 4, lines 1-32 * | 1 | G 01 S 3/78 |
| A | * figure 6; column 10, lines 19-24 *<br>--- | | |
| Y | DE-A-2 916 195 (PHILIPS PATENTVERWALTUNG GMBH)<br>* figure 1, page 1, line 11 - page 5, line 2 *<br>--- | 1 | |
| A | DE-B-2 220 316 (G. PUSCH)<br>* figure 1; column 3, lines 27-48 * &<br>GB - A - 1 431 792 (Cat. D)<br>--- | | |
| A | US-A-4 699 498 (S. NAEMURA et al.)<br>* figure 1; abstract *<br>--- | 9 | |
| A | AT-A- 344 410 (BODENSEEWERK GERÄTETECHNIK GMBH)<br>* figur 1, page 2, lines 30-33 *<br>----- | | |

TECHNICAL FIELDS SEARCHED (Int. Cl.4)

G 01 S 3/78

The present search report has been drawn up for all claims

| Place of search | Date of completion of the search | Examiner |
|---|---|---|
| BERLIN | 15-08-1988 | BREUSING J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P0401)